# EUROPÄISCHE PATENTSCHRIFT

(11) **EP 3 507 513 B1**
(45) Veröffentlichungstag und Bekanntmachung des Hinweises auf die Patenterteilung: **11.11.2020**
(21) Anmeldenummer: 17764340.0
(22) Anmeldetag: 24.08.2017
(51) Int. Cl.: F16C 19/52, F16C 19/38, F16C 19/18

(54) **LAGER UND VERFAHREN ZUR VERSCHLEISSÜBERWACHUNG UND/ODER LASTMESSUNG**
BEARING AND METHOD TO MONITOR WEAR AND/OR LOAD MEASURING
PALIER ET METHODE DE SURVEILLANCE D'USURE ET/OU DE MESURE DE CHARGE

(30) Priorität: 30.08.2016 DE 102016116113
(43) Veröffentlichungstag der Anmeldung: 10.07.2019
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); ROLLMANN, Jörg, 59558 Lippstadt (DE); STENZEL, Christopher, 59494 Soest (DE)
(74) Vertreter: thyssenkrupp Intellectual Property GmbH
(86) Internationale Anmeldenummer: PCT/EP2017/071293
(87) Internationale Veröffentlichungsnummer: WO 2018/041702

(56) Entgegenhaltungen:
- EP-A2- 1 528 356
- DE-A1- 19 919 007
- JP-A- 2005 345 277

## Beschreibung

### Stand der Technik

Lager werden eingesetzt, um Bauteile beweglich zueinander zu führen, zum Beispiel durch zwei konzentrisch umeinander angeordnete Lagerringe, wovon einer drehfest angeordnet ist, die direkt oder indirekt aneinander abrollen. Dabei werden je nach Größe und Aufbau des Lagers teils erhebliche Kräfte aufgenommen. Da derartige Lager oftmals an schwer zugänglichen Stellen eingesetzt werden, ist es wünschenswert, einen Wartungsbedarf des Lagers, beispielsweise auf Grund von Verschleiß, frühzeitig zu erkennen, um einen wartungsbedingten Ausfall des Lagers so kurz wie möglich zu halten. Der Verschleiß besteht üblicherweise in einem Materialabtrag oder in Beschädigungen wie Rissen oder Absplitterungen, insbesondere an den Kräfte aufnehmenden Flächen.

Aus EP 1 528 356 A1 ist eine Vorrichtung zur Überwachung von Großwälzlagern mit einem Sensor zur Erfassung der Relativbewegungen der Lagerringe zueinander bekannt. Dabei sind zumindest zwei berührungslose Wegmesssensoren vorgesehen, von denen einer zur Bestimmung von Radialbewegungen und einer zur Bestimmung von Axialbewegungen vorgesehen ist. Um eine kompakte Anordnung der Wegmesssensoren zu erreichen, können beide Wegmesssensoren Bewegungen in derselben Richtung messen, so dass beide Wegmesssensoren parallel zueinander ausgerichtet werden können. Um dennoch sowohl Axialals auch Radialbewegungen bestimmen zu können, kann hierbei ein Wegmesssensor eine zu der genannten Bewegungsrichtung senkrechte Messfläche abtasten, während der andere Wegmesssensor eine zu der Bewegungsrichtung keilförmig geneigte Schrägfläche abtastet. Eine Auswerteeinheit bestimmt die Bewegungen senkrecht zu der genannten einen Bewegungsrichtung aus der Differenz der beiden Sensorsignale. Der Kegelwinkel der konischen Umfangsfläche beträgt vorzugsweise weniger als 25°.

Es ist bekannt, beispielsweise aus der EP 0922 870 A1, einen Kontaktstift in eine Bohrung eines Lagerringes einzusetzen, wobei der Kontaktstift mit einem gewissen Spiel, beispielsweise ein Zehntel Millimeter, in eine Nut des gegenüberliegenden Lagerringes hineinragt. Ist der Verschleiß so hoch, dass der gegenüberliegende Lagerring den Kontaktstift berührt, übermittelt dieser ein einen Wartungsbedarf indizierendes Signal an eine entsprechende Einrichtung. Dabei ist nachteilig, dass die bekannte Lösung lediglich qualitativ einen Wartungsbedarf erkennen kann, also ob ein Verschleiß vorliegt oder nicht, aber keine quantitative Verschleißmessung erlaubt.

Weiterhin ist es bekannt, beispielsweise aus den Druckschriften WO 2008/135 123 A1, EP 529 354 B1 und DE 10 2007 020 940 B3, Hochfrequenzspulen an einem Käfig eines Wälzlagers vorzusehen, wobei die Spulen Wirbelströme in einer dem Käfig gegenüberliegenden Fläche eines Lagerringes induzieren. Durch Messung der Wirbelstromdichte kann der radiale Abstand zu der Fläche ermittelt werden und somit eine Belastungsmessung bzw. Verschleißmessung in radialer Richtung erfolgen. Nachteilig ist hierbei, dass lediglich eine radiale Abstandsänderung detektiert wird. Eine Belastung bzw. ein Verschleiß in axiale Richtung kann mit diesen Systemen nicht erkannt werden.

Schließlich ist es aus der WO 2014/090 347 A1 bekannt, gegenüber einer nichtstufenartigen Kontur eines Lagerrings wenigstens einen berührungslos messenden Sensor vorzusehen. Der Sensor kann dabei ein induktiver Sensor, ein kapazitiver Sensor, ein Ultraschallsensor oder ein Wirbelstromsensor sein. Durch die nichtstufenartige Kontur, beispielsweise eine Rampe oder eine V-artige Kontur, kann auch eine axiale Verschiebung erfasst werden. Nachteilig ist hierbei jedoch, dass bei einer Kombination von radialer und axialer Verschiebung, bedingt durch Verschleiß oder eine Belastungssituation, die radiale und die axiale Komponente nicht eindeutig voneinander getrennt werden können, da in beiden Fällen der Sensor bzw. die Sensoren eine Abstandsänderung entlang der nichtstufenartigen Kontur erfassen. In jedem Fall muss die Kontur sehr exakt gefertigt sein und das Lager, oder zumindest der Sensor in Relation zu der nichtstufenartigen Kontur, sehr genau justiert sein, was einen erheblichen Arbeitsaufwand erfordert.

### Offenbarung der Erfindung

Es ist also eine Aufgabe der vorliegenden Erfindung ein Lager mit Sensoren zur Verfügung zu stellen, welches einfach und kompakt aufgebaut ist und eine umfassende Verschleißüberwachung ermöglicht, insbesondere eine quantitative Verschleißmessung, sowie eine Lastmessung während des laufenden Betriebs. Ferner soll ein entsprechendes Verfahren zur Verschleißüberwachung und/oder Lastmessung zur Verfügung gestellt werden.

Gelöst wird diese Aufgabe mit einem Lager, insbesondere einem Wälzlager, mit einem feststehenden ersten Lagerring und einem relativ zu dem ersten Lagerring um eine Längsachse drehbar angeordneten zweiten Lagerring, wobei das Lager wenigstens einen ersten Sensor und einen zweiten Sensor aufweist, wobei der erste Sensor und der zweite Sensor berührungslos messende Sensoren sind, wobei der erste Sensor und der zweite Sensor jeweils eine Sensorfläche aufweisen, wobei der erste Sensor einer wenigstens teilweise umlaufenden Referenzkante gegenüberliegend angeordnet ist, wobei der zweite Sensor einer Referenzfläche gegenüberliegend angeordnet ist, wobei der erste Sensor zur Messung eines Überdeckungsgrades der Sensorfläche mit der Referenzkante vorgesehen ist, wobei der zweite Sensor zur Messung eines, insbesondere radialen, Abstands der Sensorfläche zu der Referenzfläche vorgesehen ist.

Das erfindungsgemäße Lager hat gegenüber dem Stand der Technik den Vorteil, dass sowohl der Verschleiß der Lagerringe als auch eine auf diese wirkende Last präzise und berührungslos gemessen werden kann, wobei besonders vorteilhaft sowohl der radiale Verschleiß als auch der axiale Verschleiß voneinander eindeutig unterscheidbar sind. Durch die Verwendung von zwei Sensoren, die unterschiedlich messen, kann eine radiale Relativverschiebung der Lagerringe von einer axialen Relativverschiebung eindeutig unterschieden werden. Alternativ oder zusätzlich können durch den erfindungsgemäßen Sensor in gleicher Weise auch auf das Lager wirkende Lasten getrennt nach axial und radial wirkenden Kräften detektiert werden. Im Rahmen dieser Anmeldung soll unter radial eine bezüglich der Längsachse, d.h. der Drehachse, und insbesondere bezüglich des zweiten Lagerrings radiale Richtung verstanden sein. Entsprechend bezeichnet axial insbesondere eine Richtung parallel zur der Längsachse. Die Referenzkante ist stufenförmig ausgebildet. Die Sensorfläche ist besonders bevorzugt in einem lastlosen, bzw. statischen, Ausgangszustand derart der Referenzkante gegenüberliegend angeordnet, dass die Referenzkante im Wesentlichen in einer Projektion auf die Sensorfläche mittig angeordnet ist. Der Überdeckungsgrad bezeichnet dabei den Anteil der Sensorfläche, der einem höheren Bereich der Kante gegenüberliegt relativ zu dem Anteil der Sensorfläche, der einem tieferen, d.h. in einem größeren Abstand zu der Sensorfläche angeordneten Abschnitt der Referenzkante, bzw. einem angrenzenden Bereich, gegenüberliegt. Anschaulich gesprochen teilt die Referenzkante in einer radialen Projektion die Sensorfläche in zwei Bereiche auf, einen ersten Bereich, der einem Bereich der Referenzkante mit einem geringen Abstand entspricht, und einen zweiten Bereich, der einem Bereich der Referenzkante mit einem größeren Abstand entspricht. In einem Ausgangszustand beträgt der Überdeckungsgrad vorzugsweise 50%. Dies ermöglicht vorteilhafterweise eine maximale mögliche Relativverschiebung der Lagerringe in beide axiale Richtungen, wobei die Relativverschiebung durch Verschleiß oder eine Last hervorgerufen wird. Vorzugsweise entspricht der Bereich der Referenzkante mit einem größeren Abstand zu der Sensorfläche wenigstens teilweise der Referenzfläche. Der zweite Sensor misst einen radialen Abstand der Lagerringe zueinander und damit eine radiale Relativverschiebung der Lagerringe, welche dauerhaft durch Verschleiß oder temporär durch einwirkende Lasten hervorgerufen wird. Hierdurch ist es vorteilhaft möglich, in einfacher und kompakter Weise ein zuverlässiges und wenigstens teilweise redundantes Messsystem vorzusehen. Der Fachmann versteht, dass sowohl der erste Sensor als auch der zweite Sensor im Endeffekt eine Abstandsmessung vornehmen. Insbesondere setzt auch die Messung des Überdeckungsgrades mit der Referenzkante eine (kombinierte) Messung des Abstands zu dem höheren und dem niedrigeren Bereich der Referenzkante voraus, d.h. dass insbesondere die axiale Relativverschiebung der Lagerringe und somit der axiale Verschleiß ebenfalls indirekt durch eine radiale Abstandsmessung ermittelt werden.

Vorteilhafte Ausgestaltungen und Weiterbildungen der Erfindung können den Unteransprüchen, sowie der Beschreibung unter Bezugnahme auf die Zeichnungen entnommen werden.

Gemäß einer bevorzugten Ausführungsform der vorliegenden Erfindung ist vorgesehen, dass der erste Lagerring ein Außenring ist und dass der zweite Lagerring ein Innenring ist, wobei der Innenring, vorzugsweise konzentrisch, wenigstens teilweise innerhalb des Außenrings angeordnet ist. Hierdurch wird in vorteilhafter Weise ein Drehlager bereitgestellt, bei dem eine Unwucht vermieden und eine einfache Messung ermöglicht wird, da somit - zumindest in einem lastlosen Ausgangszustand - an jeder Stelle des Umfangs des Innenrings ein konstanter Abstand zu dem Außenring vorliegt.

Gemäß einer bevorzugten Ausführungsform der vorliegenden Erfindung ist vorgesehen, dass der erste Sensor und der zweite Sensor an dem ersten Lagerring vorgesehen sind. Hierdurch ist es vorteilhaft möglich, eine Verkabelung der Sensoren und/oder eine Datenübertragung einfacher vorzusehen. Ganz besonders bevorzugt ist vorgesehen, dass der erste Sensor und/oder der zweite Sensor wenigstens teilweise in einer Bohrung in dem ersten und/oder zweiten Lagerring angeordnet ist. Noch mehr bevorzugt ist der erste Sensor und/oder der zweite Sensor in der Bohrung befestigt, beispielsweise form-, kraft- und/oder stoffschlüssig mit der Bohrung verbunden, insbesondere verklebt und/oder verschraubt. Hierdurch wird in besonders vorteilhafter Weise ein besonders kompaktes Lager bereitgestellt und es wird insbesondere ermöglicht, den Sensor in demjenigen Lagerelement vorzusehen, welches statisch, also ortsfest, ist, so dass die Verkabelung des Sensors ohne Probleme, beispielsweise von außen durch die Bohrung des Außenrings, erfolgen kann, wobei die Sensoren fest mit dem Lagerring verbunden sind, wodurch vorteilhafterweise ihre korrekte Ausrichtung gewährleistet ist.

Gemäß einer weiteren bevorzugten Ausführungsform der vorliegenden Erfindung ist vorgesehen, dass der die Referenzkante und die Referenzfläche an dem dem ersten bzw. zweiten Sensor gegenüberliegenden Lagerring vorgesehen sind. Besonders bevorzugt sind die Referenzkante und die Referenzfläche einstückig mit dem jeweiligen Lagerring gefertigt. Ganz besonders bevorzugt weist der Lagerring eine wenigstens teilweise umfangsmäßig umlaufende Nut auf, wobei die Nut wenigstens teilweise die Referenzkante und/oder die Referenzfläche umfasst. Eine solche Nut weist vorzugsweise eine, insbesondere konstante, Breite von wenigstens 6mm, bis maximal 18mm auf. Vorzugsweise weist eine Lauffläche des ersten oder zweiten Lagerrings die Nut auf. Eine Lauffläche ist dabei insbesondere eine Fläche, über die der erste bzw. zweite Lagerring und/oder ein oder mehrere Wälzkörper abrollen und damit diejenigen Flächen, die einem besonders hohen Verschleiß unterliegen. Besonders bevorzugt weist die Lauffläche wenigstens teilweise die Referenzfläche auf. Vorzugsweise sind die Referenzkante und/oder die Referenzfläche vollständig umlaufend vorgesehen. Eine nur teilweise umlaufende Referenzkante bzw. Referenzfläche ist beispielsweise bei Schwenklagern sinnvoll, bei denen der erste und der zweite Lagerring keine vollständigen Umdrehungen umeinander durchführen. Durch eine wenigstens teilweise Integration in die Laufflächen ist es vorteilhaft möglich, den benötigten Bauraum zu minimieren und zugleich die Verschleiß- bzw. Lastmessungen an den am stärksten beanspruchten Stellen vorzunehmen.

Gemäß einer weiteren bevorzugten Ausführungsform ist vorgesehen, dass das Lager ein mehrreihiges Wälzlager ist, insbesondere eine dreireihige Rollendrehverbindung, ganz besonders bevorzugt ein Großwälzlager. Das Lager ist vorzugsweise zur Verwendung in Windkraftanlagen, Tunnelbohrmaschinen, Kränen, Ölbohrmaschinen und/oder Ölübergabeplattformen vorgesehen. Derartige Lager sind sehr groß, beispielsweise weist der Außenring einen Außendurchmesser von wenigstens 1m, vorzugsweise wenigstens 1,5m, besonders bevorzugt wenigstens 5m und ganz besonders bevorzugt wenigstens 20m, insbesondere 25m, auf, und sind im eingebautem Zustand schwer zu warten, so dass hier eine präzise Verschleißüberwachung besonders wünschenswert und vorteilhaft ist. Der Fachmann erkennt, dass beispielsweise bei einer dreihreihigen Rollendrehverbindung zusätzlich ein zwischen dem ersten Lagerring und dem zweiten Lagerring angeordneter dritter Lagerring vorgesehen sein kann. Das erfindungsgemäße Prinzip lässt sich dabei auf beliebig viele Lagerringe anwenden, wobei wahlweise ein erfindungsgemäßer erster Sensor und zweiter Sensor nur in dem ersten Lagerring oder wietere erste und zweite Sensoren in dem gleichen oder weiteren Lagerringen angeordnet sein können.

Gemäß einer weiteren bevorzugten Ausführungsform ist vorgesehen, dass der erste Sensor und/oder der zweite Sensor ein kapazitiv messender Sensor, ein induktiv messender Sensor, ein Ultraschallsensor und/oder ein Wirbelstromsensor ist. Im Rahmen dieser Erfindung ist es besonders bevorzugt vorgesehen, dass der erste Sensor und der zweite Sensor ein Wirbelstromsensor ist. Ein solcher Wirbelstromsensor ist zur Detektion einer Wirbelstromdichte vorgesehen und umfasst vorzugsweise eine Erregerspule, insbesondere eine Hochfrequenzspule, zum Erzeugen eines elektromagnetischen Feldes durch Anlegen eines Wechselstroms. Dieses Magnetfeld induziert im zu untersuchenden Material, welches insbesondere wenigstens teilweise elektrisch leitfähig ist, Wirbelströme. Der Wirbelstromsensor detektiert das wiederum durch die Wirbelströme erzeugte Magnetfeld. Durch den Spalt zwischen dem Wirbelstromsensor und dem Material, welcher beispielsweise mit Luft und/oder einem Schmierstoff gefüllt ist, werden dabei die Magnetfelder gedämpft, d.h. die messbare Amplitude der Magnetfeldstärke wird verringert. Daraus lässt sich der Abstand zwischen einer Sensorfläche des Wirbelstromsensors und dem Material ermitteln. Wirbelstromsensoren ermöglichen insbesondere Abstandsmessungen im Bereich von 0,1 µm bis zu 10 mm mit einer Auflösung im Mikrometerbereich. Daher ist gemäß einer bevorzugten Weiterbildung vorgesehen, dass das Lager, insbesondere der erste und/oder der zweite Lagerring, wenigstens teilweise aus einem elektrisch leitfähigen Material gefertigt ist. Wirbelstromsensoren sind vorteilhafterweise unempfindlich gegenüber Verschmutzungen und Temperaturschwankungen und tragen durch ihre berührungslose Messung nicht zum Verschleiß bei. Durch Verwendung eines Wirbelstromsensors ist es somit besonders vorteilhaft möglich, eine präzise und einfache Verschleißüberwachung und/oder Lastmessung vorzunehmen.

Gemäß einer weiteren bevorzugten Ausführungsform ist vorgesehen, dass die Sensorfläche des ersten Sensors und/oder des zweiten Sensors eine Stirnfläche des Sensors ist, wobei die Stirnfläche insbesondere kreisförmig ausgebildet ist. Besonders bevorzugt ist der erste Sensor und/oder der zweite Sensor im Wesentlichen stabförmig ausgebildet, wobei die Stirnfläche, d.h. die Sensorfläche, insbesondere parallel zu der Referenzfläche und/oder der Referenzkante bzw. einem angrenzenden Bereich angeordnet ist. Für den Fall, dass eine Nut vorgesehen ist die die Referenzkante und/oder die Referenzfläche umfasst, sind die Abmessungen der Sensorflächen vorzugsweise entsprechend auf die Abmessungen der Nut abgestimmt. Beispielsweise ist für den Fall einer Nut mit einer Breite von 12mm eine kreisförmige Sensorfläche mit einem Durchmesser von maximal 12mm vorgesehen.

Gemäß einer weiteren bevorzugten Ausführungsform ist vorgesehen, dass in einem Ausgangszustand, d.h. insbesondere in einem lastfreien Zustand, der erste Sensor und/oder der zweite Sensor in einem Abstand von wenigstens 5mm, 6mm, 7mm, 8mm, 9mm oder 10mm zu der Referenzkante bzw. der Referenzfläche angeordnet sind. Besonders bevorzugt weist der erste Sensor den gleichen Abstand zu einem höheren Bereich der Referenzkante auf wie der zweite Sensor zu der Referenzfläche. Ganz besonders bevorzugt ist die Sensorfläche des ersten Sensors bündig mit dem Lagerring vorgesehen. Hierdurch wird in vorteilhafter Weise ein zum Betrieb des Lagers ausreichender Abstands der Lagerringe ermöglicht und dennoch eine präzise Messung gewährleistet.

Gemäß einer bevorzugten Ausführungsform ist vorgesehen, dass entlang eines Umfangs des ersten Lagerrings und/oder des zweiten Lagerrings mehrere erste und/oder zweite Sensoren angeordnet sind. Hierdurch wird besonders vorteilhafter Weise eine technische Redundanz der Verschleißüberwachung und/oder Lastmessung ermöglicht, wodurch die Zuverlässigkeit der Verschleißüberwachung und/oder Lastmessung erhöht wird. Zudem können somit vorteilhaft Lasten in alle Richtungen sicher detektiert werden.

Ein weiterer Gegenstand der vorliegenden Erfindung ist ein Verfahren zur Verschleißüberwachung und/oder Lastmessung mit einem erfindungsgemäßen Lager, wobei während eines Betriebs des Lagers, insbesondere während einer Drehung des zweiten Lagerrings relativ zu dem ersten Lagerring, der erste Sensor wenigstens zeitweise den Überdeckungsgrad der Sensorfläche mit der Referenzkante misst und der zweite Sensor wenigstens zeitweise den Abstand der Sensorfläche zu der Referenzfläche misst.

Das erfindungsgemäße Verfahren ermöglicht in vorteilhafter Weise eine präzise und einfache Verschleißüberwachung und/oder Lastmessung insbesondere durch Abstandsmessungen. Hierdurch ist es vorteilhaft möglich, frühzeitig einen Wartungsbedarf zu erkennen und somit Ausfallzeiten und/oder verschleißbedingte Schäden zu minimieren sowie Belastungssituationen des Lagers besser zu analysieren; beispielsweise um das Lager besser auszulegen.

Gemäß einer bevorzugten Ausführungsform ist vorgesehen, dass der erste und/oder zweite Sensor, wenn der gemessene Wert einen vorbestimmten Wert überschreitet, eine Information, insbesondere an eine Kontrolleinheit, übermittelt. Hierdurch ist es in vorteilhafter Weise möglich, eine frühzeitige Verschleißwarnung bereitzustellen.

Gemäß einer weiteren bevorzugten Ausführungsform ist vorgesehen, dass der erste Sensor und/oder der zweite Sensor kontinuierlich oder in vorbestimmten Zeitabständen misst. Besonders bevorzugt misst der erste und/oder zweite Sensor wenigstens einmal pro vollständigem Umlauf des Innen- bzw. Außenrings. Ganz besonders bevorzugt jedoch misst der erste und/oder zweite Sensor im Betrieb kontinuierlich, übermittelt seine Messdaten jedoch vorzugsweise nur in vorbestimmten Zeitintervallen, insbesondere einmal pro Umlauf, und/oder wenn ein vorbestimmter Schwellenwert überschritten wird. Hierdurch wird in vorteilhafter Weise eine sichere und kontinuierliche Verschleißüberwachung bzw. Lastmessung ermöglicht, wobei die Datenübertragung jedoch effizient vorgesehen ist. Durch eine regelmäßige Übertragung der Messwerte ist es zudem vorteilhaft möglich, eine Funktionskontrolle der Sensoren zu gewährleisten. Übermittelt einer der Sender keine Messdaten mehr, kann somit auf eine Fehlfunktion geschlossen werden.

Gemäß einer weiteren bevorzugten Ausführungsform des erfindungsgemäßen Verfahrens ist vorgesehen, dass der erste Sensor und/oder der zweite Sensor pro vollständigem Umlauf des zweiten Lagerrings und/oder eines Wälzkörpers wenigstens Anzahl von zwischen zwei und tausend Messungen, also zum Beispiel zwei, vier, fünf, zehn, hundert, etc., durchführt. Hierdurch ist es vorteilhaft möglich zu verhindern, dass stets die gleiche Stelle gemessen wird, wodurch möglicherweise Belastungen bzw. ein Verschleiß an anderen Stellen nicht detektiert würde. Besonders bevorzugt messen der erste und/oder der zweite Sensor in, insbesondere gleichmäßigen, Zeitintervallen, wobei die Umlaufzeit für eine vollständige Umdrehung des zweiten Lagerrings kein ganzzahliges Vielfaches der Zeitintervalle ist. Hierdurch ist es vorteilhaft möglich, dass bei einer langfristigen Messung jede Stelle des Lagerrings vermessen und überprüft wird. Dies ermöglicht vorteilhafterweise auch eine Unterscheidung zwischen einem Verschleiß und einer Last, da ein Verschleiß stets an der gleichen gemessenen Stelle des Lagerrings auftritt, während eine Last stets von dem gleichen Sensor erfasst wird. Wenn also mehrere erste und/oder zweite Sensoren vorgesehen sind, würde ein lokaler Verschleiß bzw. eine lokale Beschädigung entsprechend der Drehung des zweiten Lagerrings nacheinander von den Sensoren erfasst, während bei einer auf das Lager wirkenden Last im Wesentlichen konstante Messwerte durch die Sensoren gemessen würden.

Gemäß einer weiteren bevorzugten Ausführungsform des erfindungsgemäßen Verfahrens ist vorgesehen, dass die von dem ersten Sensor und/oder dem zweiten Sensor gemessenen Daten derart bearbeitet, insbesondere gefiltert, werden, dass ein Verschleiß von einer belastungsinduzierten Verformung unterschieden wird. Hierdurch ist in vorteilhafter Weise eine Lastmessung möglich, insbesondere im Unterschied zu einer Verschleißmessung bzw. - überwachung. Der Fachmann versteht dabei, dass ein Verschleiß insbesondere eine konstante Relativverschiebung der Lagerringe zueinander verursacht, während hingegen eine Last eine temporäre Verformung und damit eine temporäre Relativverschiebung verursacht. Zudem ist es möglich, dass ein Verschleiß einen gleichmäßigen Materialabtrag verursacht und somit über im Wesentlichen den gesamten Umfang der Lagerringe hinweg eine im Wesentlichen konstante Abstandsänderung des ersten Lagerrings zu dem zweiten Lagerring bewirkt, während eine Belastung insbesondere eine Belastungsrichtung aufweist, wodurch an zwei umfangsmäßig gegenüberliegenden Seiten der Lagerringe eine betragsmäßig größte Abstandsänderung auftritt, während an anderen Stellen lediglich eine betragsmäßig geringere Abstandsänderung auftritt. Vorzugsweise weist das Lager dazu mehrere erste und zweite Sensoren auf, die entlang des Umfangs verteilt angeordnet sind. Durch Auswertung der Messwerte aller Sensoren kann somit, wie im vorherigen Absatz erläutert, vorteilhafterweise ein Verschleiß von einer Belastungssituation unterschieden werden.

Gemäß noch einer weiteren bevorzugten Ausführungsform des erfindungsgemäßen Verfahrens ist vorgesehen, dass das Lager mehrere erste Sensoren und/oder mehrere zweite Sensoren umfasst, die vorzugsweise entlang des Umfangs des ersten Lagerrings verteilt angeordnet sind, wobei die ersten Sensoren und/oder die zweiten Sensoren derart verschaltet werden und/oder die gemessenen Daten derart ausgewertet werden, dass eine Verkippung des ersten Lagerrings relativ zu dem zweiten Lagerring erkannt wird. Insbesondere erfolgt eine solche Verkippung derart, dass der zweite Lagerring eine neue Drehachse aufweist, die mit der Längsachse bzw. der ursprünglichen Drehachse des Lagers bzw. des ersten Lagerrings einen Winkel einschließt. Durch Auswertung der Messwerte aller Sensoren wird eine Verteilung der axialen und der radialen Relativverschiebung aufgezeigt. Eine Verkippung ist durch eine Kombination aus axialer und radialer Relativverschiebung der Lagerringe darstellbar und unterscheidet sich von einer reinen achsenparallen axialen bzw. radialen Relativverschiebung insbesondere dadurch, dass nicht alle entlang des Umfangs angeordnete Sensoren die gleichen Verschiebungen messen. Stattdessen werden beispielsweise entlang des Umfangs um 180° versetzte Sensoren unterschiedliche Verschiebungsrichtungen detektieren. Hierdurch ist es besonders vorteilhaft möglich, eine verschleiß- und/oder belastungsbedingte Verkippung der Lagerringe zu detektieren. Da eine Verkippung zu schweren Schäden an dem Lager führen kann, ist es wünschenswert und vorteilhaft, eine solche Verkippung frühzeitig zu erkennen.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

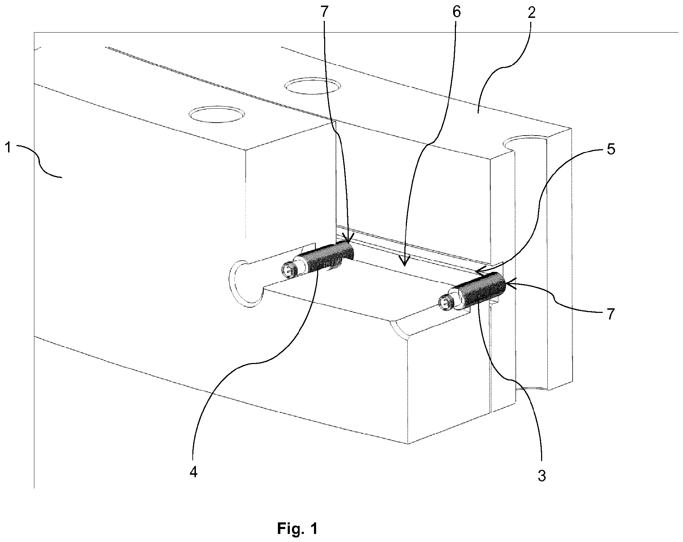

- **Figur 1**: zeigt eine perspektivische Schnittzeichnung eines Lagers gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In **Figur 1** ist eine perspektivische Schnittzeichnung eines Lagers gemäß einer beispielhaften Ausführungsform der vorliegenden Erfindung dargestellt. Das Lager ist dabei hier ein Großwälzlager wie es beispielsweise, aber nicht ausschließlich, für Windkraftanlagen eingesetzt wird. Ein solches Großwälzlager hat beispielsweise einen Außendurchmesser von ca. 2,5m. Andere Einsatzbereiche und andere Lagerausführungen, beispielsweise mit ineinander greifenden Verzahnungen anstelle von Wälzkörpern, oder einem Schwenklager anstelle eines Drehlagers, sind dabei selbstverständlich ebenfalls möglich.

Das Lager weist einen statischen, d.h. ortsfest angeordneten bzw. feststehenden, ersten Lagerring 1, hier einen Außenring 1 auf, sowie einen konzentrisch in dem Außenring 1 angeordneten zweiten Lagerring 2, hier einen Innenring 2. Dabei ist der Innenring 2 drehbar um eine mittig durch den Innenring 2 verlaufende Drehachse bzw. Längsachse vorgesehen, d.h. der Innenring 2 ist drehbar relativ zu dem Außenring 1 vorgesehen. In dem Außenring 1 sind voneinander beabstandet zwei durchgehende und in radialer Richtung verlaufende Bohrungen vorgesehen, wobei in den Bohrungen ein erster Sensor 3 und ein zweiter Sensor 4 angeordnet sind. Bei den Sensoren 3, 4 handelt es sich vorliegend um Wirbelstromsensoren. Die Sensoren 3, 4 sind dabei im Wesentlichen stabförmig ausgebildet und in den Bohrungen befestigt, z.B. verklebt. Die Sensoren 3, 4 weisen eine hier kreisförmig ausgestaltete Stirnfläche auf, die einer Sensorfläche 7 entspricht.

Der erste Sensor und der zweite Sensor sind relativ zu dem Innenring 2 derart angeordnet, dass der erste Sensor 3 mittig einer Referenzkante 5 gegenüberliegt. Die Referenzkante 5 ist dabei wie hier abgebildet stufenförmig vorgesehen und weist insbesondere einen 90°-Winkel an der Kante auf. Die Referenzkante 5 grenzt an zwei Bereiche an, einen Bereich mit einem geringen Abstand zu der Sensorfläche 7 sowie einem Bereich mit einem hohen Abstand zur Sensorfläche 7. Beide Bereiche sind dabei parallel zueinander und parallel zu der Sensorfläche 7 des ersten Sensors 3 angeordnet.

Der zweite Sensor 4 ist derart angeordnet, dass er einer Referenzfläche 6 gegenüberliegt, wobei die Sensorfläche 7 des zweiten Sensors 4 parallel zu der Referenzfläche 6 ausgerichtet ist. Bei der Referenzfläche 6 kann es sich um eine Lauffläche handeln, d.h. eine Fläche, auf der beispielsweise der erste Lagerring 1 und der zweite Lagerring 2 aufeinander abrollen oder auf der Wälzkörper abrollen, die in Kontakt mit dem ersten Lagerring 1 und dem zweiten Lagerring 2 stehen. Hier sind die Referenzkante 5 und die Referenzfläche 6 aneinander angrenzend vorgesehen und als Teil einer Nut ausgebildet, die beispielsweise eine Breite von ca. 12mm-15mm aufweist. Entsprechend weisen hier der erste Sensor 3 und der zweite Sensor 4 einen Durchmesser von ca. 12mm-15mm auf, wobei insbesondere der erste Sensor 3 baugleich mit dem zweiten Sensor 4 ist, so dass der zweite Sensor 4 in die Nut passt, ohne dass die Referenzkante 5 in einer radialen Projektion auf der Sensorfläche 7 des zweiten Sensors 4 liegt. Dies bedeutet, dass der zweite Sensor ausschließlich einen Abstand zu der Referenzfläche 6 misst.

Die Wirbelstromsensoren umfassen vorzugsweise neben einer Sensoreinheit zur Detektion einer Wirbelstromdichte, insbesondere über eine Messung von Magnetfeldern, eine Erregerspule, die bei Anlegen eines Wechselstromes Hochfrequenzfelder erzeugt. Diese Hochfrequenzfelder induzieren in dem zu sensierenden Material, also hier dem Material im Bereich der Referenzkante 5 bzw. dem Material im Bereich der Referenzfläche 6, Wirbelströme. Diese erzeugen wiederum Magnetfelder, die von den Wirbelstromsensoren detektiert werden. Durch den Abstand zwischen der Referenzkante 5 und der Sensorfläche 7 des ersten Sensors 3 bzw. zwischen der Referenzfläche 6 und der Sensorfläche 7 des zweiten Sensors 4 werden die Magnetfelder dabei gedämpft, d.h. insbesondere dass die detektierbare Magnetfeldstärke eine geringere Amplitude aufweist. Der Spalt zwischen Material und Sensor 3, 4 kann dabei beispielsweise ein Luftspalt sein und/oder wenigstens teilweise mit einem Schmiermittel gefüllt sein. Durch die Wirbelstrommessung kann somit der Abstand zwischen dem Material und den Sensoren 3, 4 ermittelt werden. Die Referenzkante 5 und die Referenzfläche 6, bzw. das Material in diesen Bereichen, ist wenigstens teilweise elektrisch leitend vorgesehen, d.h. wenigstens teilweise aus einem elektrisch leitfähigen Material gefertigt. Auf diese Weise kann der zweite Sensor 4 einen Abstand zwischen seiner Stirnfläche, d.h. der Sensorfläche 7, und der Referenzfläche 6 messen. Eine Änderung dieses Abstands, beispielsweise eine Verringerung des Abstands, deutet dann auf einen Verschleiß oder eine auf das Lager einwirkende Last hin.

Der erste Sensor 3 misst einen Überdeckungsgrad der Referenzkante 5 mit der Sensorfläche 7. Da die Referenzkante 5 in einer radialen Projektion im Bereich der Sensorfläche 7 des ersten Sensors 3 liegt, misst der erste Sensor 3 sowohl teilweise einen geringen Abstand zu einem höheren Bereich der Referenzkante 5 als auch teilweise einen höheren Abstand zu dem niedrigeren Bereich der Referenzkante 5. Der Überdeckungsgrad gibt also an, welcher Anteil der Sensorfläche 7 von welchem Bereich der Referenzkante überdeckt wird, also anders ausgedrückt, wo in einer radialen Projektion sich die Referenzkante 5 auf der Sensorfläche 7 befindet. Dies äußert sich in einem kombinierten Abstandsmesswert zu den beiden Bereichen der Referenzkante 5. Bei einer axialen Last bzw. einem axialen Verschleiß verschieben sich der erste Lagerring 1 und der zweite Lagerring 2 zueinander in axiale Richtung, d.h. die Position der Referenzkante 5 ändert sich in Relation zu der Sensorfläche 7. Dementsprechend ändert sich der Überdeckungsgrad. Insbesondere unter Berücksichtigung des von dem zweiten Sensor 4 gemessenen Abstands zu der Referenzfläche 6, was vorzugsweise dem Abstands zu dem niedrigeren Bereich der Referenzkante 5 entspricht, lässt sich somit eine Information über die axiale (Relativ-)Verschiebung bestimmen.

Der Fachmann versteht, dass durch eine entsprechende Verschaltung mehrerer erster Sensoren 3 und/oder mehrerer zweiter Sensoren 4 weitere Messungen, wie beispielsweise eine Messung einer Verkippung zwischen Innenring 2 und Außenring 1, ermöglicht werden. Im Falle einer Verkippung um einen Punkt der (ursprünglichen) Längs- bzw. Drehachse würden beispielsweise zwei umfangsmäßig um 180° versetzt angeordnete erste Sensoren 3 entgegengesetzte Änderungen des Überdeckungsgrades messen. Zwei weitere erste Sensoren 3, die wiederum um 180° zueinander, aber um 90° von den zuvor beschriebenen ersten Sensoren 3 versetzt angeordnet sind, würden hingegen im Optimalfall, d.h. bei einer optimalen Ausrichtung der Sensoren relativ zu der Verkippungsachse, keine oder wenigstens die gleiche Änderung des Überdeckungsgrades messen.

Insbesondere wird durch eine Kombination der Messergebnisse des ersten Sensors 3 und des zweiten Sensors 4 eine eindeutige Aufteilung in eine axiale und eine radiale Verschiebungskomponente ermöglicht.

### Bezugszeichenliste

- 1: erster Lagerring, Außenring
- 2: zweiter Lagerring, Innenring
- 3: erster Sensor
- 4: zweiter Sensor
- 5: Referenzkante
- 6: Referenzfläche
- 7: Sensorfläche

## Patentansprüche

1. Lager, insbesondere Wälzlager, mit einem feststehenden ersten Lagerring (1) und einem relativ zu dem ersten Lagerring (1) um eine Längsachse drehbar angeordneten zweiten Lagerring (2), wobei das Lager wenigstens einen ersten Sensor (3) und einen zweiten Sensor (4) aufweist, wobei der erste Sensor (3) und der zweite Sensor (4) berührungslos messende Sensoren sind, wobei der erste Sensor (3) und der zweite Sensor (4) jeweils eine Sensorfläche (7) aufweisen, wobei der zweite Sensor (4) einer Referenzfläche (6) gegenüberliegend angeordnet ist und zur Messung eines Abstands der Sensorfläche (7) zu der Referenzfläche (6) vorgesehen ist, **dadurch gekennzeichnet, dass** der erste Sensor (3) einer wenigstens teilweise umlaufenden, stufenförmig ausgebildeten Referenzkante (5) gegenüberliegend angeordnet ist, wobei der erste Sensor (3) zur Messung eines Überdeckungsgrades der Sensorfläche (7) mit der Referenzkante (5) vorgesehen ist.

2. Lager nach Anspruch 1, **dadurch gekennzeichnet, dass** die Sensorfläche (7) des ersten Sensors (3) und/oder des zweiten Sensors (4) eine Stirnfläche des Sensors (3, 4) ist, wobei die Stirnfläche insbesondere kreisförmig ausgebildet ist.

3. Lager nach einem der vorhergehenden Ansprüche, **dadurch gekennzeichnet, dass** der erste Sensor (3) und/oder der zweite Sensor (4) ein kapazitiv messender Sensor, ein induktiv messender Sensor, ein Ultraschallsensor und/oder ein Wirbelstromsensor ist.

4. Lager nach einem der vorhergehenden Ansprüche, **dadurch gekennzeichnet, dass** entlang eines Umfangs des ersten Lagerrings (1) und/oder des zweiten Lagerrings (2) mehrere erste und/oder zweite Sensoren (3, 4) angeordnet sind.

5. Lager nach einem der vorhergehenden Ansprüche, **dadurch gekennzeichnet, dass** der erste Sensor (3) und/oder der zweite Sensor (4) wenigstens teilweise in einer Bohrung in dem ersten und/oder zweiten Lagerring (1, 2) angeordnet ist.

6. Lager nach einem der vorhergehenden Ansprüche, **dadurch gekennzeichnet, dass** das Lager ein mehrreihiges Wälzlager ist, insbesondere eine dreireihige Rollendrehverbindung, ganz besonders bevorzugt ein Großwälzlager.

7. Verfahren zur Verschleißüberwachung und/oder Lastmessung mit einem Lager nach einem der vorhergehenden Ansprüche, wobei während eines Betriebs des Lagers, insbesondere während einer Drehung des zweiten Lagerrings (2) relativ zu dem ersten Lagerring (1), der erste Sensor (3) wenigstens zeitweise den Überdeckungsgrad der Sensorfläche (7) mit der Referenzkante (5) misst und der zweite Sensor (4) wenigstens zeitweise den Abstand der Sensorfläche (7) zu der Referenzfläche (6) misst.

8. Verfahren nach Anspruch 7, wobei die von dem ersten Sensor (3) und/oder dem zweiten Sensor (4) gemessenen Daten derart bearbeitet, insbesondere gefiltert, werden, dass ein Verschleiß von einer belastungsinduzierten Verformung unterschieden wird.

9. Verfahren nach einem der Ansprüche 7 oder 8, wobei der erste Sensor (3) und/oder der zweite Sensor (4) kontinuierlich oder in vorbestimmten Zeitabständen misst.

10. Verfahren nach einem der Ansprüche 7 bis 9, wobei das Lager mehrere erste Sensoren (3) und/oder mehrere zweite Sensoren (4) umfasst, die vorzugsweise entlang des Umfangs des ersten Lagerrings (1) verteilt angeordnet sind, wobei die ersten Sensoren (3) und/oder die zweiten Sensoren (4) derart verschaltet werden und/oder die gemessenen Daten derart ausgewertet werden, dass eine Verkippung des ersten Lagerrings (1) relativ zu dem zweiten Lagerring (2) erkannt wird.

## Claims

1. A bearing, in particular a rolling bearing, comprising a stationary first bearing ring (1) and a second bearing ring (2) which is arranged in a rotatable manner about a longitudinal axis relative to the first bearing ring (1), wherein the bearing has at least a first sensor (3) and a second sensor (4), wherein the first sensor (3) and the second sensor (4) are contactlessly measuring sensors, wherein the first sensor (3) and the second sensor (4) each have a sensor surface (7), wherein the second sensor (4) is arranged opposite a reference surface (6) and is provided for measuring a distance between the sensor surface (7) and the reference surface (6), **characterized in that** the first sensor (3) is arranged opposite an at least partly circumferential, step-shaped reference edge (5), wherein the first sensor (3) is provided for measuring the degree of overlap between the sensor surface (7) and the reference edge (5).

2. The bearing according to claim 1, **characterized in that** the sensor surface (7) of the first sensor (3) and/or the second sensor (4) is an end face of the sensor (3, 4), wherein the end face has a circular shape in particular.

3. The bearing according to any one of the preceding claims, **characterized in that** the first sensor (3) and/or the second sensor (4) is a capacitively measuring sensor, an inductively measuring sensor, an ultrasound sensor and/or an eddy current sensor.

4. The bearing according to any one of the preceding claims, **characterized in that** a plurality of first and/or second sensors (3, 4) are arranged along a circumference of the first bearing ring (1) and/or the second bearing ring (2).

5. The bearing according to any one of the preceding claims, **characterized in that** the first sensor (3) and/or the second sensor (4) is arranged at least partly in a bore in the first and/or second bearing ring (1, 2).

6. The bearing according to any one of the preceding claims, **characterized in that** the bearing is a multiple-row rolling bearing, in particular a three-row roller-bearing slewing ring, especially preferably a large-diameter rolling bearing.

7. A method for monitoring wear and/or measuring a load with a bearing according to any one of the preceding claims, wherein during an operation of the bearing, in particular during a rotation of the second bearing ring (2) relative to the first bearing ring (1), the first sensor (3) measures at least temporarily the degree of overlap between the sensor surface (7) and the reference edge (5) and the second sensor (4) measures at least temporarily the distance between the sensor surface (7) and the reference surface (6).

8. The method according to claim 7, wherein the data measured by the first sensor (3) and/or the second sensor (4) is processed, in particular filtered, in such a way that a wear is distinguished from a load-induced deformation.

9. The method according to any one of claims 7 or 8, wherein the first sensor (3) and/or the second sensor (4) measures continuously or at predetermined time intervals.

10. The method according to any one of claims 7 to 9, wherein the bearing comprises a plurality of first sensors (3) and/or a plurality of second sensors (4), which are preferably arranged distributed along the circumference of the first bearing ring (1), wherein the first sensors (3) and/or the second sensors (4) are interconnected and/or the measured data is evaluated in such a way that a tilting of the first bearing ring (1) relative to the second bearing ring (2) is identified.

## Revendications

1. Palier, en particulier palier à roulement, comprenant une première bague de palier fixe (1) et une deuxième bague de palier (2) disposée de manière à pouvoir tourner par rapport à la première bague de palier (1) autour d'un axe longitudinal, le palier présentant au moins un premier capteur (3) et un deuxième capteur (4), le premier capteur (3) et le deuxième capteur (4) étant des capteurs de mesure sans contact, le premier capteur (3) et le deuxième capteur (4) présentant chacun une surface de capteur (7), le deuxième capteur (4) étant disposé en regard d'une surface de référence (6) et étant prévu pour mesurer une distance de la surface de capteur (7) à la surface de référence (6), **caractérisé en ce que** le premier capteur (3) est disposé en regard d'une arête de référence (5) au moins partiellement circonférentielle, réalisée sous forme étagée, le premier capteur (3) étant prévu pour mesurer un degré de recouvrement de la surface de capteur (7) par l'arête de référence (5).

2. Palier selon la revendication 1, **caractérisé en ce que** la surface de capteur (7) du premier capteur (3) et/ou du deuxième capteur (4) est une surface frontale du capteur (3, 4), la surface frontale étant notamment réalisée sous forme circulaire.

3. Palier selon l'une quelconque des revendications précédentes, **caractérisé en ce que** le premier capteur (3) et/ou le deuxième capteur (4) est/sont un capteur à mesure capacitive, un capteur à mesure inductive, un capteur à ultrasons et/ou un capteur à courants de Foucault.

4. Palier selon l'une quelconque des revendications précédentes, **caractérisé en ce que** le long d'une périphérie de la première bague de palier (1) et/ou de la deuxième bague de palier (2) sont disposés plusieurs premiers et/ou deuxièmes capteurs (3, 4).

5. Palier selon l'une quelconque des revendications précédentes, **caractérisé en ce que** le premier capteur (3) et/ou le deuxième capteur (4) est/sont disposé(s) au moins en partie dans un alésage dans la première et/ou la deuxième bague de palier (1, 2) .

6. Palier selon l'une quelconque des revendications précédentes, **caractérisé en ce que** le palier est un palier à roulement à plusieurs rangées, en particulier une couronne d'orientation à rouleaux à trois rangées, de manière particulièrement préférée un gros palier à roulement.

7. Procédé de surveillance de l'usure et/ou de mesure de charge avec un palier selon l'une quelconque des revendications précédentes, dans lequel, pendant un fonctionnement du palier, en particulier pendant une rotation de la deuxième bague de palier (2) par rapport à la première bague de palier (1), le premier capteur (3) mesure au moins temporairement le degré de recouvrement de la surface de capteur (7) par l'arête de référence (5) et le deuxième capteur (4) mesure au moins temporairement la distance de la surface de capteur (7) à la surface de référence (6).

8. Procédé selon la revendication 7, dans lequel les données mesurées par le premier capteur (3) et/ou par le deuxième capteur (4) sont traitées, en particulier filtrées, de telle sorte qu'une usure soit distincte d'une déformation induite par la charge.

9. Procédé selon l'une quelconque des revendications 7 et 8, dans lequel le premier capteur (3) et/ou le deuxième capteur (4) mesure(nt) en continu ou à intervalles temporels prédéterminés.

10. Procédé selon l'une quelconque des revendications 7 à 9, dans lequel le palier comprend plusieurs premiers capteurs (3) et/ou plusieurs deuxièmes capteurs (4), qui sont de préférence répartis le long de la périphérie de la première bague de palier (1), les premiers capteurs (3) et/ou les deuxièmes capteurs (4) étant branchés de telle sorte, et/ou les données mesurées étant analysées de telle sorte, qu'un basculement de la première bague de palier (1) par rapport à la deuxième bague de palier (2) soit détecté.
